# EUROPÄISCHE PATENTSCHRIFT

(11) **EP 2 554 501 B1**
(45) Veröffentlichungstag und Bekanntmachung des Hinweises auf die Patenterteilung: **29.10.2014**
(21) Anmeldenummer: 12153952.2
(22) Anmeldetag: 03.02.2012
(51) Int. Cl.: B65G 47/91

(54) **Verfahren zum Transport von Lebensmittelscheiben**
Method for transporting slices of food products
Procédé pour transporter des tranches de denrées alimentaires

(30) Priorität: 04.08.2011 EP 11176622
(43) Veröffentlichungstag der Anmeldung: 06.02.2013
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- DE-A1- 2 524 916
- DE-A1-102008 062 343
- US-A- 6 024 392

## Beschreibung

Die Erfindung betrifft die Verwendung einer Vorrichtung und ein Verfahren zum Transport von Lebensmittelscheiben, insbesondere für das Portionieren und/oder Verpacken der Lebensmittelscheiben, sowie ein Verfahren zur Herstellung verpackter Lebensmittelscheiben, die auf einer Unterlage positioniert sind. Weiter betrifft die Erfindung die Verwendung eines Leitungsabschnitts, der einen Saugabschnitt bildet und z.B. nach Art eines Sauggreifers zum periodischen bzw. zyklischen Halten und/oder Heben von Lebensmittelscheiben eingerichtet ist, die gegen eine Ansaugöffnung des Haltevorrichtung angeordnet werden, als Haltevorrichtung für Lebensmittelscheiben, die sich überdecken.

Die Lebensmittelscheiben überdecken sich optional vollständig oder überdecken sich nicht vollständig bzw. nur teilweise, z.B. über einen Anteil von 5-95%. Die erfindungsgemäße Haltevorrichtung weist eine Ansaugöffnung auf, die mit Unterdruck beaufschlagbar ist. Das unter Verwendung der Haltevorrichtung durchführbare Verfahren erlaubt den gleichzeitigen Transport einer Mehrzahl von Lebensmittelscheiben, z.B. auf eine Unterlage mit anschließendem Verschließen oder Überdecken der Unterlage zur Herstellung verpackter Lebensmittelscheiben. Der Unterdruck kann durch eine angeschlossene Unterdruckquelle angelegt werden und bevorzugt durch eine mit der Haltevorrichtung verbundenen Unterdruckquelle erzeugt werden, deren Antrieb aus einer Druckluftquelle besteht. Die Vorrichtung und das damit durchgeführte Verfahren sind insbesondere an das Halten bzw. den Transport von Lebensmittelscheiben angepasst, die eine trockene Oberfläche oder einen Flüssigkeitsfilm, wässrig und/oder fettig, auf der Oberfläche aufweisen können. Bevorzugte Lebensmittel sind Fleischscheiben, Wurstscheiben, Käsescheiben, Brotscheiben, wahlweise mit zwischenliegenden Trennfolien, z.B. aus Papier oder Kunststoff. In bevorzugter Ausführungsform ist die Vorrichtung nach einer Schneidmaschine, insbesondere nach einem Slicer angeordnet, und transportiert eine Mehrzahl von Lebensmittelscheiben auf einer Unerlage, die bevorzugt anschließend verschlossen wird. Bevorzugt legt die Schneidmaschine die Lebensmittelscheiben mit einer nicht vollständigen Überdeckung ab und die Haltevorrichtung hält bzw. transportiert eine Mehrzahl von Lebensmittelscheiben in dieser Überdeckung.

### Stand der Technik

Generell ist für den Transport von Gegenständen bekannt, Sauggreifer auf deren Oberfläche anzuordnen, die Unterdruck mittels einer angeschlossenen Unterdruckquelle oder mit eingebauter Unterdruckpumpe erzeugen.

Die EP 2149517 A2 beschreibt einen Sauggreifer, der eine mit Druckluft betriebene Ejektordüse zur Erzeugung eines Unterdrucks an deren Saugseite aufweist und eine an der Saugseite angeschlossene Saugkammer, die eine von einem Gitter abgedeckte Saugöffnung aufspannt.

### Aufgabe der Erfindung

Die Erfindung stellt sich die Aufgabe, die Verwendung einer alternativen Haltevorrichtung und ein alternatives Verfahren für das Halten und den Transport von Lebensmittelscheiben und bevorzugt für die Herstellung verpackter Lebensmittelscheiben bereitzustellen. Insbesondere soll die Vorrichtung das Halten bzw. Transportieren einer Mehrzahl von sich nicht vollständig überdeckenden Lebensmittelscheiben erlauben. Bevorzugt ist die Haltevorrichtung mit einer Unterdruckquelle verbunden.

### Allgemeine Beschreibung der Erfindung

Die Erfindung löst die Aufgabe mit den Merkmalen der Ansprüche und stellt insbesondere die Verwendung eines Leitungsabschnitts als Haltevorrichtung für Lebensmittelscheiben bereit, der eine Ansaugöffnung bildet. Die Ansaugöffnung ist für den gleichzeitigen Transport von Lebensmittelscheiben eingerichtet. Es hat sich herausgestellt, dass ein Mehrzahl von Lebensmittelscheiben, die sich teilweise überdecken, gleichzeitig, d.h. unter Beibehaltung ihrer teilweisen Überdeckung, mittels Unterdruck gegen eine Ansaugöffnung gehalten werden und durch Bewegung der Haltevorrichtung mit der Ansaugöffnung präzise transportiert und nach Verminderung des Unterdrucks präzise deponiert werden können, z.B. auf eine Unterlage. Die Überdeckung der Lebensmittelscheiben wird beibehalten, so dass das Verfahren den gleichzeitigen Transport der Lebensmittelscheiben ermöglicht. Vorteilhafter Weise weisen die Vorrichtung und das Verfahren keine mechanischen Greifer auf, die unterhalb der Lebensmittelscheiben anzuordnen sind.

Die Überdeckung der Lebensmittelscheiben beträgt z.B. 5 bis 95%, bevorzugt 10 bis 90%, bevorzugter 20 bis 80% oder 30 bis 70%, jeweils bezogen auf die einander zugewandten Oberflächen der Lebensmittelscheiben, die durch ihre Schmalseiten bzw. Kanten begrenzt werden.

Der gleichzeitige Transport einer Mehrzahl von Lebensmittelscheiben wird darauf zurückgeführt, dass der an der Ansaugöffnung anliegende Unterdruck in Zwischenräume der sich überdeckenden Lebensmittelscheiben wirkt und zwischen diesen den Bernoullieeffekt hervorruft, so dass die Lebensmittelscheiben gegeneinander gezogen werden. In Ausführungsformen, in denen Lebensmittelscheiben sich vollständig überdecken, haben die Lebensmittelscheiben vorzugsweise denselben Umfang und/oder haften aneinander, insbesondere dadurch, dass sie eine feuchte Oberfläche aufweisen. Entsprechend ist der Unterdruckerzeuger ein kontinuierlicher Unterdruckerzeuger, der mit dem Leitungsabschnitt verbunden ist und die durch die Ansaugöffnung und zwischen den Lebensmittelscheiben einströmende Luft ansaugt und einen Unterdruck auch bei einströmender Luft aufrecht erhält. Bevorzugt dauert der Transport bzw. das Halten der Lebensmittelscheiben mit anliegendem Unterdruck 0,2 bis 10s, bevorzugt 0,2 bis 2s, bevorzugter 0,5 bis 1s.

Die Vorrichtung ist dadurch für die Verwendung vorteilhaft, dass sie keine relativ zueinander beweglichen Elemente aufweist, die die Lebensmittelscheiben kontaktieren, z.B. keine relativ zueinander beweglichen Elemente eines Greifers.

Die Ansaugöffnung ist endständig an dem Leitungsabschnitt angeordnet, der den Saugabschnitt bildet und z.B. trichterförmig, zylindrisch oder glockenförmig sein kann. Die Ansaugöffnung weist eine Größe auf, die optional größer als die Gesamtfläche der Mehrzahl von Lebensmittelscheiben ist, z.B. länger und/oder breiter als die von der Mehrzahl von Lebensmittelscheiben gebildete Gesamtfläche. Alternativ ist die Ansaugöffnung kleiner als die von der Mehrzahl der Lebensmittelscheiben gebildete Gesamtfläche und wird bei Anordnung gegen die Mehrzahl der Lebensmittelscheiben vollständig von diesen überdeckt. Die Ansaugöffnung weist vorzugsweise umfänglich geschlossene Kanten auf, so dass die Ansaugöffnung vollständig von einer umlaufenden Kante begrenzt bzw. umfasst ist. Bevorzugt ist die Kante, die die Ansaugöffnung begrenzt, in einer Ebene angeordnet.

Die Ausführungsform, in der die Ansaugöffnung kleiner als die von der Mehrzahl der Lebensmittelscheiben gebildete Gesamtfläche ist, erlaubt ein Verfahren zur Herstellung verpackter Lebensmittelscheiben durch Transport der Lebensmittelscheiben auf eine Unterlage, deren Wände unmittelbar an die Kanten der Lebensmittelscheiben angrenzen und/oder dessen Wände sich wesentlich, z.B. um zumindest 0,5cm, bevorzugter zumindest 2cm oder zumindest 5cm oder zumindest 10cm über den Boden der Unterlage erstrecken. Denn die Haltevorrichtung kontaktiert die Lebensmittelscheiben nur an der Oberfläche, die der Unterlage bzw. der Oberfläche gegenüberliegt, die auf der Unterlage positioniert wird. Überdies überragt die Vorrichtung in der Ausführungsform, in der die Ansaugöffnung kleiner als die von der Mehrzahl der Lebensmittelscheiben gebildete Gesamtfläche ist, nicht die Kanten der Lebensmittelscheiben und erlaubt ein Verfahren zur Herstellung verpackter Lebensmittelscheiben mit Positionierung der Lebensmittelscheiben auf der Unterlage, während die Lebensmittelscheiben gegen die Ansaugöffnung gesaugt werden, mit anschließender Verminderung des Unterdrucks. In dieser Ausführungsform des Verfahrens kann die Unterlage Wände aufweisen, die dicht an die Kanten der Lebensmittelscheiben angrenzen, z.B. mit einem Abstand von maximal 5mm, bevorzugt maximal 2 oder maximal 1mm.

Unabhängig vom Querschnitt des Leitungsabschnitts in einem Abstand zur Ansaugöffnung kann die Ansaugöffnung rechteckig, kreisförmig, oval oder jede andere beliebige Form aufweisen, vorzugsweise eine Form, die einem ununterbrochenen Flächenausschnitt der Gesamtfläche entspricht, die von den sich überdeckenden Lebensmittelscheiben gebildet wird.

Die Kanten, die die Ansaugöffnung begrenzen, können starr oder elastisch sein, z.B. gummielastisch.

Der Leitungsabschnitt verbindet die Ansaugöffnung mit einer Öffnung, die an eine Unterdruckquelle angeschlossen ist. Innerhalb des Leitungsabschnitts sind bevorzugt Abstandshalter angeordnet, die maximal bis die Ebene der Ansaugöffnung ragen, bevorzugt in einem Abstand zur Ebene der Ansaugöffnung enden, z.B. in einem Abstand von 0,2 bis 2cm oder bis 1cm. Die Abstandshalter sind z.B. auf der Innenoberfläche des Leitungsabschnitts festgelegt, der den Saugabschnitt bildet, der in der Ansaugöffnung endet. Die Abstandshalter sind z.B. untereinander um 10 bis 1cm, bevorzugt 5 bis 2cm beabstandet. Als Abstandhalter kann ein einzelner Steg oder ein Gitter, z.B. aus zumindest zwei parallelen oder sich kreuzenden Stegen, innerhalb des Leitungsabschnitts befestigt sein.

Der vom Leitungsabschnitt gebildete Saugabschnitt ist mit einem Unterdruckerzeuger verbunden, so dass vom Unterdruckerzeuger erzeugter Unterdruck durch den Saugabschnitt in die von der Kante begrenzte Saugöffnung wirkt. Der Unterdruckerzeuger kann unmittelbar angrenzend an den Saugabschnitt angeordnet sein oder mittels einer starren oder flexiblen Leitung mit dem Saugabschnitt verbunden sein.

Bevorzugt weist die Haltevorrichtung eine zeitabhängige Steuerung auf, die das Anliegen den Unterdrucks taktet, insbesondere dadurch mit der Bewegung der Haltevorrichtung koordiniert, dass in einer ersten Endstellung Unterdruck in den Leitungsabschnitt wirkt, z.B. durch Anstellen des Unterdruckerzeugers, und in einer beabstandeten zweiten Endstellung zum Abwerfen der Lebensmittelscheiben der Unterdruck in dem Leitungsabschnitt abgestellt bzw. entspannt wird und bevorzugt ein Auswerfer betätigt wird oder beim bevorzugten Unterdruckerzeugter die zweite Öffnung des Zentralrohrs verschlossen wird. Optional weist die Haltevorrichtung einen Näherungsschalter auf, der eingerichtet ist, das Anlegen des Unterdrucks zu steuern und z.B. einen Unterdruckerzeuger ansteuert oder ein zwischen Unterdruckerzeuger und Haltevorrichtung angeordnetes Ventil ansteuert. In einer Ausführungsform weist der Näherungsschalter einen optischen Sensor auf oder ein beweglich an der Haltevorrichtung gelagertes Element, das durch Annäherung des Lebensmittels aus seiner unbelasteten Stellung bewegt wird. Ein solches beweglich gelagertes Element kann z.B. ein federbelastetes Element sein. Optional weist der Näherungsschalter ein Röhrchen auf, das mit Druckluft beaufschlagt ist und dessen Mündung bis maximal in die Ebene der Ansaugöffnung ragt und mit einem Stellglied verbunden ist, z.B. mit einem Ventil, das bei Überdeckung der Mündung den Unterdruckerzeuger anstellt. Bevorzugt ist die Vorrichtung eingerichtet, in einer ersten Stellung, in der die Ansaugöffnung gegen die sich überdeckenden Lebensmittelscheiben angeordnet wird, den Leitungsabschnitt mit Unterdruck zu beaufschlagen und in einer von der ersten Stellung beabstandeten zweiten Stellung den Unterdruck abzustellen und bevorzugt zusätzlich den Leitungsabschnitt mit Überdruck zu beaufschlagen und/oder einen Auswerfer zu betätigen.

Die Vorrichtung weist einen gesteuerten Unterdruckerzeuger auf, bzw. ist gesteuert mit einem Unterdruckerzeuger verbunden. Die Steuerung des Unterdruckerzeugers bzw. die Steuerung der Verbindung zum Unterdruckerzeuger erlaubt das Steuern des Anliegens von Unterdruck an der Ansaugöffnung und die gesteuerte Minderung bzw. Unterbrechung des Unterdrucks zum Ablegen der Lebensmittelscheiben nach ihrem Positionieren auf der Unterlage.

Bevorzugt weist die Vorrichtung einen Auswerfer auf, der z.B. gegen die Ansaugöffnung beweglich ist und eingerichtet ist, die Lebensmittelscheiben von der Ansaugöffnung zu entfernen. Der Auswerfer kann außerhalb, vorzugsweise innerhalb des Leitungsabschnitts angeordnet sein und z.B. mechanisch, hydraulisch, bevorzugt durch Druckluft, oder elektromechanisch beweglich sein. Alternativ kann der Auswerfer ein mit Druckluft beaufschlagbares Röhrchen sein, dass in der Ebene der Ansaugöffnung oder mit Abstand zu dieser Ebene mündet, so dass gegen die Ansaugöffnung angesaugte Lebensmittelscheiben durch Druckluft, die aus der Mündung des Röhrchens austritt, von der Ansaugöffnung weg bewegt werden. Bevorzugt ist der Auswerfer von der Position der Haltevorrichtung abhängig gesteuert.

Das Verfahren zur Herstellung verpackter Lebensmittelscheiben umfasst die Schritte des Bereitstellens von Lebensmittelscheiben, insbesondere durch Schneiden, und des Anordnens der Lebensmittelscheiben, insbesondere mit vollständiger Überdeckung, bevorzugt mit nur anteiliger Überdeckung, des Anordnens der Ansaugöffnung der Vorrichtung gegen die Lebensmittelscheiben, des Beaufschlagens der vom Leitungsabschnitt gebildeten Haltevorrichtung mit Unterdruck, z.B. durch Erzeugen von Unterdruck mittels des Unterdruckerzeugers, des Ansaugens der Lebensmittelscheiben an die vom Leitungsabschnitt aufgespannte Ansaugöffnung, des Positionierens der Lebensmittelscheiben auf einer Unterlage, des Minderns des Unterdrucks, optional des Beaufschlagens der Ansaugöffnung mit Überdruck, und des Ablegens der Lebensmittelscheiben auf der Unterlage, optional mit dem Schritt des Entfernens der Lebensmittelscheiben mittels eines Auswerfers, des Entfernens der Vorrichtung von den Lebensmittelscheiben und bevorzugt Verschließen der Unterlage, z.B. durch Versiegeln mittels eines Deckels, die insbesondere eine Folie ist.

Der Unterdruckerzeuger kann eine Vakuumpumpe sein. Vorzugsweise ist der Unterdruckerzeuger mittels einer Druckluftquelle antreibbar.

Der bevorzugte Unterdruckerzeuger weist in einem Gehäuse einen Zentralkanal auf, der vorzugsweise entlang der Längsmittelachse des Gehäuses angeordnet ist. Der Zentralkanal weist eine erste Öffnung auf, die von einer konvexen Fläche um den Zentralkanal aufgespannt wird. Die konvexe Fläche erstreckt sich vorzugsweise rotationssymmetrisch um die Längsachse des Zentralkanals und weist besonders bevorzugt eine zum Radius der Längsmittelachse des Zentralkanals parabelförmige Krümmung auf, deren Steigung in Richtung auf die Längsmittelachse des Zentralkanals zunimmt, d.h. deren Steigung mit abnehmendem Radius größer wird, um eine zur Längsmittelachse zunehmende Krümmung zu bilden. Der Zentralkanal weist im Anschluss an die konvexe Fläche seinen kleinsten Querschnitt auf und weitet sich ab diesem kleinsten Querschnitt in Richtung auf seine zweite Öffnung auf, die der ersten Öffnung gegenüber liegt, vorzugsweise mit konisch zunehmendem Querschnitt.

Die erste Öffnung des Zentralkanals wird von einer ringförmigen Auslassöffnung eines Eintrittskanals begrenzt. Dabei ist die ringförmige Auslassöffnung durch eine von der konvexen Fläche beabstandete Schulter gebildet, sodass der Querschnitt der Auslassöffnung in einem an die erste Öffnung angrenzenden Abschnitt angeordnet ist, vorzugsweise um einen axialen Abschnitt der Längsachse des Zentralkanals beabstandet ist. Die Schulter ist vorzugsweise ringförmig, sodass sie mit der beabstandeten konvexen Fläche, die die erste Öffnung aufspannt, eine ringförmige Auslassöffnung um die Längsachse des Zentralkanals bildet.

Der Saugabschnitt ist gegenüber der ersten Öffnung und um die ringförmige Auslassöffnung beabstandet mit dem Unterdruckerzeuger verbunden. Optional kann der Saugabschnitt angrenzend an die erste Öffnung bzw. angrenzend an die Schulter eine starre oder flexible Leitung aufweisen, durch die der Unterdruck wirkt und die die Kante beabstandet, z.B. um insgesamt 20cm bis 5m oder mehr, z.B. um die Haltevorrichtung selbst klein zu halten und um die vom Unterdruckerzeuger ausgehenden Geräusche von der Haltevorrichtung fern zu halten.

Generell weist die Ansaugöffnung vorzugsweise einen offenen Querschnitt auf, wobei der Querschnitt des von dem Leitungsabschnitt gebildeten Saugabschnitts von Stegen oder einem Gitter überspannt sein kann, die das Eindringen angesaugter Gegenstände, insbesondere von Lebensmittelbestandteilen vermindern. Vorzugsweise weist ein Gitter, das den Saugabschnitt, vorzugsweise in einem Abstand zur Ansaugöffnung, überspannt, Gitteröffnungen mit einem Querschnitt auf, der gleich oder kleiner ist als der Querschnitt des Zentralkanals an dessen Abschnitt kleinsten Querschnitts. In dieser Ausführung werden nur Bestandteile durch das Gitter angesaugt, die auch durch den Abschnitt kleinsten Querschnitts des Zentralkanals treten können, so dass Verstopfungen des Zentralkanals vermieden werden. Gitter oder Stege können in einem Abstand zur Ansaugöffnung innerhalb des Leitungsabschnitts angeordnet sein, z.B. zu 10% bis 80% oder bis 50% der Entfernung zwischen Ansaugöffnung und erster Öffnung von der Ansaugöffnung beabstandet.

Stege oder Gitter, die die Ansaugöffnung bzw. den Saugabschnitt überspannen, können Durchlassöffnungen aufweisen, die kleiner als das zu haltende Lebensmittel sind, da dieser Unterdruckerzeuger generell eingerichtet ist, bei Druckluftzufuhr das Lebensmittel gegen die Ansaugöffnung anzusaugen und bei Unterbrechung der Druckluftzufuhr das Lebensmittel, z.B. unter Schwerkrafteinfluss, von der Ansaugöffnung abfallen zu lassen. Dieser Unterdruckerzeuger weist vorzugsweise ein Ventil auf, das eingerichtet ist, periodisch die Druckluftzufuhr zur ringförmigen Auslassöffnung zu öffnen, so dass dann das Lebensmittel gegen die Kanten angesaugt wird, und entsprechend die Druckluftzufuhr zu unterbrechen, um das Lebensmittel fallen zu lassen. Die Schulter wird z.B. von einem Rohrabschnitt gebildet. Der an der ersten Öffnung gebildete Unterdruck wirkt in den Rohrabschnitt.

Die zweite Öffnung des Zentralkanals ist mit einer Austrittsöffnung verbunden, aus der die durch die ringförmige Auslassöffnung einströmende Druckluft in Mischung mit durch die Ansaugöffnung angesaugter Luft und angesaugten festen und/oder flüssigen Bestandteilen austritt. Denn die die erste Öffnung aufspannende konvexe Fläche erzeugt bei Beaufschlagung der ringförmigen Auslassöffnung mit Druckluft einen Unterdruck, der in den Saugabschnitt wirkt, wobei die aus der ringförmigen Auslassöffnung austretende Druckluft entlang der konvexen Fläche in den Zentralkanal strömt und durch dessen gegenüberliegende zweite Öffnung austritt.

Optional kann die zweite Öffnung des Zentralkanals zumindest teilweise, insbesondere vollständig verschließbar sein, z.B. mittels eines Ventils, das an der zweiten Öffnung oder an dem an die zweite Öffnung anschließenden Austrittskanal angeordnet ist. Das Ventil kann unmittelbar an der zweiten Öffnung angeordnet sein oder an einer Leitung, die an der zweiten Öffnung des Zentralrohrs angeschlossen ist und den Austrittskanal bildet. Der Schritt des Verschließens der zweiten Öffnung führt in einem Verfahren mit der Haltevorrichtung dazu, dass ein an der Ansaugöffnung angesaugtes Lebensmittel von den Kanten weg abgestoßen bzw. abgeblasen wird. Denn das Verschließen der zweiten Öffnung verhindert das Ausströmen der mit angesaugter Luft vermischten Druckluft durch den Zentralkanal und erzeugt in dem Rohrabschnitt einen Überdruck, der durch den Leitungsabschnitt und die Ansaugöffnung austritt.

Bevorzugt ist der Leitungsabschnitt direkt mit dem Rohrabschnitt des bevorzugten Unterdruckerzeugers verbunden, insbesondere können Leitungsabschnitt und Rohrabschnitt aneinander angrenzen oder einstückig ausgebildet sein.

Bevorzugt wird die Austrittsöffnung dadurch gebildet, dass die zweite Öffnung des Zentralkanals mit einem Austrittskanal verbunden ist, der in der Austrittsöffnung mündet. Die Austrittsöffnung weist vorzugsweise einen Querschnitt auf, der in Richtung auf die Ebene gerichtet ist, in der die Ansaugöffnung angeordnet ist, und vorzugsweise parallel zum Querschnitt der Saugöffnung liegt, sodass aus der Austrittsöffnung austretende feste oder flüssige Bestandteile in Richtung auf das an der Ansaugöffnung angeordnete Lebensmittel austreten.

In einer Ausführungsform wird der Austrittskanal von einem Abschnitt des Gehäuses gebildet, der in einem Abstand um die Oberfläche der Leitung angeordnet ist, die dem Eintrittskanal gegenüber liegt. Auf diese Weise können Eintrittskanal und Austrittskanal koaxial zum Zentralkanal angeordnet sein und durch eine Leitung voneinander getrennt sein, die zwischen Gehäuse und Außenwandung des Zentralkanals angeordnet ist.

Bevorzugt wird der Austrittskanal von der Innenwand eines Gehäuses und dem Rohrabschnitt gebildet, der den Saugabschnitt bildet und eine Schulter aufweist, die mit der beabstandeten konvexen Fläche an der ersten Öffnung des Zentralkanals die ringförmige Auslassöffnung begrenzt. Das Gehäuse umfasst das Zentralrohr, das den Zentralkanal bildet, so dass die Oberfläche des Zentralrohrs, die gegenüber dem Zentralkanal liegt, mit der Innenwand des Gehäuses und einem Teil des Rohrabschnitts den Austrittskanal bildet. Vorzugsweise weist das Gehäuse einen Druckluftanschluss und den anschließenden Eintrittskanal auf, der Druckluft zur ringförmigen Auslassöffnung leitet. Der Eintrittskanal ist vorzugsweise in einem Abschnitt als Rohr oder Schlauch ausgebildet und weist einen um die ringförmige Auslassöffnung angeordneten Ringkanalabschnitt auf, der bevorzugt koaxial zur ringförmigen Auslassöffnung ist. Der Ringkanalabschnitt hat vorzugsweise einen rotationssymmetrisch um die ringförmige Auslassöffnung angeordneten konstanten Querschnitt. Der als Rohr oder Schlauch ausgebildete Abschnitt des Eintrittskanals kann außerhalb des Gehäuses angebracht sein, oder vorzugsweise innerhalb des Gehäuses verlaufen. Besonders bevorzugt verläuft der Eiritrittskanal innerhalb zumindest einer Haltestange, die den Rohrabschnitt mit dem Gehäuse verbindet und z.B. an einem Gehäuseabschnitt befestigt ist, der gegenüber der Ansaugöffnung, z.B. am zweiten Ende, angeordnet ist.

Bevorzugt ist der Gehäuseabschnitt gegenüber der Ansaugöffnung als Trägerplatte ausgebildet, die eine Befestigungseinrichtung zur Befestigung der Haltevorrichtung an einem Maschinen- oder Roboterarm aufweist, der z.B. Bestandteil eines Slicers ist, wobei die Befestigungseinrichtung optional den Druckluftanschluss trägt. Entsprechend weist bevorzugt das Gehäuse gegenüber der Ansaugöffnung oder in einem Abstand zur Ansaugöffnung eine Trägerplatte auf, die mittels zumindest eines Trägers mit dem Rohrabschnitt verbunden ist. In dieser Ausführungsform ist bevorzugt, dass das Gehäuse von der zweiten Öffnung des Zentralrohrs beabstandet ist, insbesondere dadurch, dass die Trägerplatte in einem Abstand von der zweiten Öffnung angeordnet ist, so dass das Volumen zwischen der Innenwand des Gehäuses und dem Zentralrohr den Austrittskanal bildet, so dass z.B. durch die Vergrößerung des Querschnitts vom Zentralkanal zum Austrittskanal eine Reduktion der Strömungsgeschwindigkeit und/oder eine Reduktion der Geräuschentwicklung an der Austrittsöffnung erreicht wird.

Weiter bevorzugt ist das Gehäuse gegenüber der zweiten Öffnung des Zentralrohrs, z.B. die Deckelplatte, nach innen konvex ausgebildet, z.B. kalottenförmig, mit parabelförmigem Querschnitt, oder kegelförmig, und bevorzugt zur Längsachse des Zentralrohrs symmetrisch, so dass das Gehäuse bzw. die Deckelplatte in Richtung auf das Zentralrohr ragen. Diese Ausführungsform ist durch die geringere Geräuschentwicklung beim Betrieb vorteilhaft, z.B. im Vergleich mit einem Gehäuse mit zylindrischem Innenquerschnitt.

Der Unterdruckerzeuger dieser Ausführungsform weist eine von einem Leitungsabschnitt, der einen Saugabschnitt bildet, aufgespannte Ansaugöffnung auf, wobei in einem Abstand zur Ansaugöffnung in dem Rohrabschnitt eine um die ringförmige Auslassöffnung vom Saugabschnitt beabstandete konvexe Oberfläche angeordnet ist, die eine erste Öffnung eines in einem Zentralrohr gebildeten Zentralkanals aufspannt, wobei die konvexe Fläche in einem axialen Abschnitt mit dem kleinsten Querschnitt des Zentralkanals mündet, an welchen sich ein Abschnitt des Zentralkanals anschließt, der sich bis zu einer der ersten Öffnung gegenüberliegenden zweiten Öffnung aufweitet, und die ringförmige Auslassöffnung über einen Eintrittskanal mit einem Druckluftanschluss verbunden ist, wobei das Zentralrohr längs seiner Längsachse verschieblich in einer Ausnehmung des Rohrabschnitts geführt ist, bis eine erste Anlagefläche, die das Zentralrohr auf seiner Außenfläche gegenüber dem Zentralkanal aufweist, an einer dazu parallelen zweiten Anlagefläche des Rohrabschnitts anliegt, wobei vorzugsweise das Zentralrohr von einem Gehäuse umfasst ist.

Die Haltevorrichtung mit einem solchen Unterdruckerzeuger ist dadurch leicht zu reinigen und ist insbesondere zur Verwendung für die Reinigung in einer automatischen Spülmaschine geeignet, dass das Zentralrohr lösbar an einem von der ersten Öffnung beabstandeten Abschnitt des Rohrabschnitts angeordnet ist. In dieser Ausführungsform kann das Zentralrohr auf seiner gegenüber dem Zentralkanal angeordneten Oberfläche eine erste Anlagefläche aufweisen, die sich zumindest anteilig, vorzugsweise umfänglich geschlossen um das Zentralrohr erstreckt. Das Zentralrohr ist dadurch lösbar am Rohrabschnitt angeordnet, dass die erste Anlagefläche des Zentralrohrs gegen eine zweite Anlagefläche, die am Rohrabschnitt angeordnet ist, lösbar anstößt, optional mit der zweiten Anlagefläche verrastbar ist und insbesondere nur gegen die zweite Anlagefläche anliegt und durch die Schwerkraft und/oder die bei Zutritt von Druckluft erzeugte Kraft gegen die zweite Anlagefläche belastet ist. In dieser Ausführungsform kann das Zentralrohr durch Entrasten bzw. durch Bewegen ohne Lösen einer Verbindung bzw. einer zusätzlichen Befestigung von der zweiten Anlagefläche entfernt werden, so dass für eine Reinigung das Zentralrohr vom Rohrabschnitt und den an diesem angeordneten Elementen einfach getrennt werden kann.

Bevorzugt ist die zweite Anlagefläche zumindest abschnittsweise, bevorzugter vollständig parallel zur ersten Anlagefläche, um bei Anordnung gegeneinander eine hinreichende Dichtung zwischen dem Eintrittskanal und dem Zentralkanal zu bilden. Vorzugsweise ist die erste Anlagefläche in einem axialen Abschnitt zwischen der von der konvexen Fläche aufgespannten ersten Öffnung und der gegenüberliegenden zweiten Öffnung des Zentralrohrs angeordnet und die zweite Anlagefläche ist in dem Abstand zur Schulter des Rohrabschnitts angeordnet, der gleich dem Abstand der ersten Anlagefläche zur ersten Öffnung plus der axialen Erstreckung der ringförmigen Auslassöffnung ist. Weiter bevorzugt erstrecken sich erste und zweite Anlagefläche radial zur Längsmittelachse des Zentralrohrs.

Bevorzugt ist die zweite Anlagefläche an einem Stutzen des Rohrabschnitts angeordnet, der gegenüber dem Saugabschnitt bzw. gegenüber der Ansaugöffnung liegt. Der Stutzen umfasst bevorzugt einen Anteil des Eintrittskanals und bildet mit der ringförmigen Schulter des Rohrabschnitts den Ringkanalabschnitt, der sich um die ringförmige Auslassöffnung erstreckt. Optional weist ein Stutzen Ausnehmungen in dem an ein Gehäuse angrenzenden Abschnitt auf. Das Gehäuse kann mit dem Stutzen verbunden sein, z.B. mittels Eingriffs von Stutzen und einem an die Austrittsöffnung angrenzenden Abschnitt des Gehäuses. Bevorzugt weist das Gehäuse eine Trägerplatte auf, die mittels zumindest eines Trägers, der sich vorzugsweise parallel zum Zentralrohr erstreckt, mit dem Stutzen verbunden. Besonders bevorzugt sind zumindest 2, bevorzugter 3 Träger zwischen Trägerplatte und Stutzen angeordnet, von denen zumindest ein Träger einen rohrförmigen Abschnitt des Eintrittskanals bildet. Optional kann der Unterdruckerzeuger genau einen Träger aufweisen, der zwischen Trägerplatte und Stutzen angeordnet ist und einen rohrförmigen Abschnitt des Eintrittskanals bildet.

Optional ist ein Stellglied am Zentralrohr angeordnet, mit dem das Zentralrohr gegenüber der Schulter des Rohrabschnitts bewegt werden kann, insbesondere parallel zur Längsachse des Zentralrohrs bewegt werden kann. Ein solches Stellglied kann das vollständige Zentralrohr gegenüber der ersten Öffnung bewegen, oder einen Abschnitt des Zentralrohrs gegenüber der ersten Öffnung bewegen, z.B. wenn das Stellglied zwei Abschnitte des Zentralrohrs gegeneinander bewegt. Der dem zweiten Ende zugewandte Abschnitt eines in zwei Abschnitte geteilten Zentralrohrs ist dabei vorzugsweise am Gehäuse fixiert. Mittels eines solchen Stellglieds kann der Abstand der ersten Öffnung bzw. der konvexen Fläche des Zentralrohrs zur Schulter des Rohrabschnitts eingestellt werden, so dass die ringförmige Auslassöffnung durch das Stellglied einstellbar ist, und damit die Stärke des Unterdrucks, der, insbesondere bei gleichem Druck der Druckluft, durch die in die ringförmige Auslassöffnung einströmende Druckluft erzeugt wird. Überdies dient ein solches Stellglied der Steuerung der Luftmenge, die durch den Zentralkanal strömt, so dass z.B. in der Ausführungsform mit einem Ventil, das die zweite Öffnung des Zentralkanal verschließt, die bei geschlossenem Zentralkanal aus der Ansaugöffnung tretende Luftmenge gesteuert wird. Ein solches Stellglied, das den Querschnitt bzw. die Größe der ringförmigen Auslassöffnung einstellt, kann z.B. zwischen der ersten und zweiten Anlagefläche angeordnet sein oder zwischen dem Zentralrohr und dem Gehäuse. Das Stellglied kann z.B. ein Piezoelement aufweisen und zwischen erster und zweiter Anlagefläche angeordnet sein. Alternativ kann das Stellglied zwei Abschnitte des Zentralrohrs längs der Mittelachse des Zentralrohrs gegeneinander bewegen, die z.B. gegeneinander veschieblich sind oder mittels eines Gewindes miteinander in Eingriff stehen.

Optional kann das Stellglied durch einen Drucksensor gesteuert sein, der z.B. im Saugabschnitt des Rohrabschnitts oder des Leitungsabschnitts angeordnet ist, so dass sich im Verfahren eine Regelung des Unterdrucks an der Ansaugöffnung ergibt. Entsprechend weist der Unterdruckerzeuger in einer bevorzugten Ausführungsform einen im Saugabschnitt, insbesondere im Rohrabschnitt oder Leitungsabschnitt angeordneten Drucksensor auf, der das Stellglied steuert, z.B. um im Verfahren einen vorgegebenen Unterdruck an der Ansaugöffnung einzuregeln.

Optional steht das Zentralrohr mit dem Rohrabschnitt in Eingriff, wenn die erste gegen die zweite Anlagefläche angeordnet ist, z.B. in Eingriff mittels Gewinde oder mittels Bajonettverschlusses. In dieser Ausführungsform kann das Stellglied eine Stellschraube und/oder einen Stellmotor aufweisen und zwischen Rohrabschnitt und Zentralrohr angeordnet sein, wobei das Zentralrohr mit einem Gewinde des Rohrabschnitts drehbar in Eingriff steht.

In dieser Ausführungsform kann das Zentralrohr optional ausschließlich durch Anordnung seiner ersten Anlagefläche gegen die am Rohrabschnitt angeordnete zweite Anlagefläche positionsgenau am Rohrabschnitt angeordnet sein, bevorzugt in Kombination mit der Führung des Zentralrohrs längs seiner Längsachse in dem Rohrabschnitt, um mit der ersten Öffnung die ringförmige Auslassöffnung zu bilden, da beim Betrieb die durch die ringförmige Auslassöffnung strömende Druckluft einen Unterdruck erzeugt, der die konvexe Fläche des Zentralrohrs gegen die Anlagefläche belastet. Wenn die erste Anlagefläche von einem z.B. ringförmigen Ansatz um das Zentralrohr gebildet wird, kann der innerhalb des Gehäuses erzeugte Überdruck den Ansatz des Zentralrohrs gegen die zweite Anlagefläche belasten und halten. Entsprechend kann der Unterdruckerzeuger dieser Ausführungsform ohne stoffschlüssige oder klemmende Verbindung bzw. Schraubverbindung zwischen dem Zentralrohr und dem Rohrabschnitt ausgebildet sein.

In einer Ausführungsform kann der Unterdruckerzeuger einen Rohrabschnitt mit einer vorzugsweise kreisförmigen Schulter und eine in einem Abstand zu der Schulter angeordnete zweite Anlagefläche und einen zwischen der Schulter und der zweiten Anlagefläche angeordneten Ringkanalabschnitt, der mit einem Eintrittskanal verbunden ist, sowie ein Zentralrohr mit einer ersten Öffnung, die von einer konvexen ringförmigen Fläche eingefasst ist, einer gegenüberliegenden zweiten Öffnung und einer ersten Anlagefläche, die parallel zur zweiten Anlagefläche ausgebildet ist, gegen die zweite Anlagefläche angeordnet ist und zwischen erster und zweiter Öffnung am Zentralrohr angeordnet ist, aufweisen oder daraus bestehen, wobei bevorzugt eine Austrittsöffnung dadurch gebildet ist, dass die zweite Öffnung des Zentralkanals mit dem Austrittskanal verbunden ist, der insbesondere von der Innenwand des Gehäuses und der Außenoberfläche des Zentralrohrs gebildet ist, wobei der Austrittskanal in eine Austrittsöffnung mündet, die in Richtung auf die Ebene angeordnet ist, in der die Ansaugöffnung aufgespannt ist.

Generell kann die Austrittsöffnung in Alternative zu der Öffnung zwischen Gehäuse und dem Rohrabschnitt, der mit dem die Ansaugöffnung bilden Leitungsabschnitt verbunden ist, von einem Ende einer Leitung gebildet sein, die an der zweiten Öffnung des Zentralrohrs angeschlossen ist. Diese alternative Ausführungsform erlaubt die Ableitung der Abluft, die aus der zweiten Öffnung des Zentralrohrs austritt, in eine größere Entfernung von dem Gehäuse. Diese Ausführungsform ist dahingehend vorteilhaft, dass die Geräuschentwicklung beim Betrieb am Gehäuse selbst geringer ist.

Vorzugsweise wird der Eintrittskanal, der in der ringförmigen Auslassöffnung mündet, von der Außenwandung des Zentralkanals und einer zu dieser beabstandeten Leitung, die vorzugsweise zylindrisch ist, gebildet. Der Eintrittskanal ist mit einer Zuleitung mit einem Druckluftanschluss verbunden, an den eine Druckluftquelle anschließbar ist.

Bei Verwendung des erfindungsgemäßen Unterdruckerzeugers in einem Verfahren zum Transport bzw. Anheben von Gegenständen, die insbesondere Lebensmittel sind, wird der Druckluftanschluss mit Druckluft beaufschlagt, die durch den Eintrittskanal strömt und durch die ringförmige Auslassöffnung etwa senkrecht zur Längsachse des Zentralkanals strömt. Auf diese Weise wird die konvexe Oberfläche, die sich radial um die Längsachse des Zentralkanals erstreckt, von radial zur Längsachse des Zentralkanals strömender Druckluft angeströmt. Im Zusammenwirken mit dem sich vergrößernden Durchmesser des Zentralkanals in dem Abschnitt, der sich an dessen Abschnitt mit geringstem Querschnitt angrenzend an die konvexe Fläche anschließt, wird ein Unterdruck erzeugt, der durch den Saugabschnitt und den Rohrabschnitt in den Leitungsabschnitt und in die von diesem aufgespannte Ansaugöffnung wirkt. Die Ansaugöffnung ist von der Kante eingefasst, die am Leitungsabschnitt angebracht ist. Durch Anordnung eines Lebensmittels über die Ansaugöffnung, bzw. an die Kante, saugt die Haltevorrichtung das Lebensmittel gegen die Kante.

Die durch die ringförmige Auslassöffnung des bevorzugten Unterdruckerzeugers austretende Druckluft tritt in Mischung mit der Luft und festen bzw. flüssigen Bestandteilen, die durch die Ansaugöffnung eintreten, durch die erste Öffnung, durch den Zentralkanal und nach Durchströmen des Austrittskanal aus der Austrittsöffnung. Da der Zentralkanal in seinem Abschnitt, der an die konvexe Fläche gegenüber der ersten Öffnung angrenzt, seinen geringsten Querschnitt aufweist, können angesaugte Bestandteile, die durch diesen geringsten Querschnitt des Zentralkanals hindurchtreten, durch die Strömung längs des Zentralkanals durch dessen zweite Öffnung austreten, und anschließend durch den Austrittskanal und die Austrittsöffnung austreten, ohne von einer Unterdruckquelle wie einer Vakuumpumpe angesaugt zu werden. Auf diese Weise werden durch die besondere Strömungsführung des bevorzugten Unterdruckerzeugers mögliche Verschmutzungen außerhalb der Haltevorrichtung vermieden. Bei Anordnung der Austrittsöffnung in Richtung auf die Ebene, in der die Ansaugöffnung angeordnet ist, können mit dem bevorzugten Unterdruckerzeuger vom angesaugten Gegenstand gelöste feste oder flüssige Bestandteile wieder auf den angesaugten Gegenstand zurückübertragen werden. Alternativ kann die Austrittsöffnung eine Leitung oder einen Schlauch aufweisen, optional mit angeschlossenem Filter oder Zyklon zur Abscheidung von festen oder flüssigen Bestandteilen von austretender Luft.

Der Zentralkanal des bevorzugten Unterdruckerzeugers wird mit einem Zentralrohr gebildet, an dessen erstem Ende die erste Öffnung des Zentralkanals angeordnet ist, und dessen gegenüberliegendes zweites Ende die zweite Öffnung aufweist. Die dem Zentralkanal gegenüberliegende Außenwandung des Zentralrohrs bildet in der bevorzugten Ausführungsform gemeinsam mit einer das Zentralrohr umfassenden Leitung, die vorzugsweise zylindrisch ist, den Eintrittskanal für Druckluft.

In einer optionalen Ausführungsform des bevorzugten Unterdruckerzeugers besteht das Zentralrohr aus zumindest zwei Abschnitten, von denen ein erster Abschnitt den Bereich des Zentralkanals von dessen erster Öffnung bis zumindest in den geringsten Querschnitt des Kanals, bevorzugter bis in einen Bereich des sich konisch aufweitenden Zentralkanals umfasst und einem angrenzenden zweiten Abschnitt, der den Zentralkanal fortsetzt, beispielsweise dessen sich konisch aufweitenden Abschnitt, und die zweite Öffnung umfasst, oder in der zweiten Öffnung endet. Besonders bevorzugt sind der erste und der zweite Abschnitt des Zentralrohrs gegeneinander entlang der Längsachse des Zentralkanals verschieblich, beispielsweise indem sie mit mittels Gewindeeingriffs gegeneinander längs der Längsachse des Zentralkanals beweglich sind.

Vorzugsweise umfasst das Gehäuse das zumindest abschnittsweise koaxial in der zylindrischen Leitung angeordnete Zentralrohr mit Abstand, durch welchen der Austrittskanal zwischen der Leitung und dem Gehäuse gebildet wird.

### Genaue Beschreibung der Erfindung

Die Erfindung wird nun genauer mit Bezug auf die Figuren beschrieben, die schematisch
- in Figur 1 einen Sauggreifer in Aufsicht,
- in Figur 2 einen Sauggreifer im Schnitt,
- in Figur 3 einen Sauggreifer im Schnitt,
- in Figur 4 eine Ausführungsform der Vorrichtung im Schnitt,
- in Figur 5 eine bevorzugte Ausführungsform der Vorrichtung im Schnitt,
- in Figur 6 die Ausführungsform von Figur 2 mit der Schnittebene vor dem Zentralrohr
   und
- in Figur 7 eine Ausführungsform im Schnitt zeigen.

In den Figuren bezeichnen die Bezugsziffern funktionsgleiche Elemente. Die in den Figuren beschriebenen Einzelheiten sind erfindungsgemäß kombinierbar, auch wenn sie mit Bezug auf verschiedene Figuren beschrieben sind.

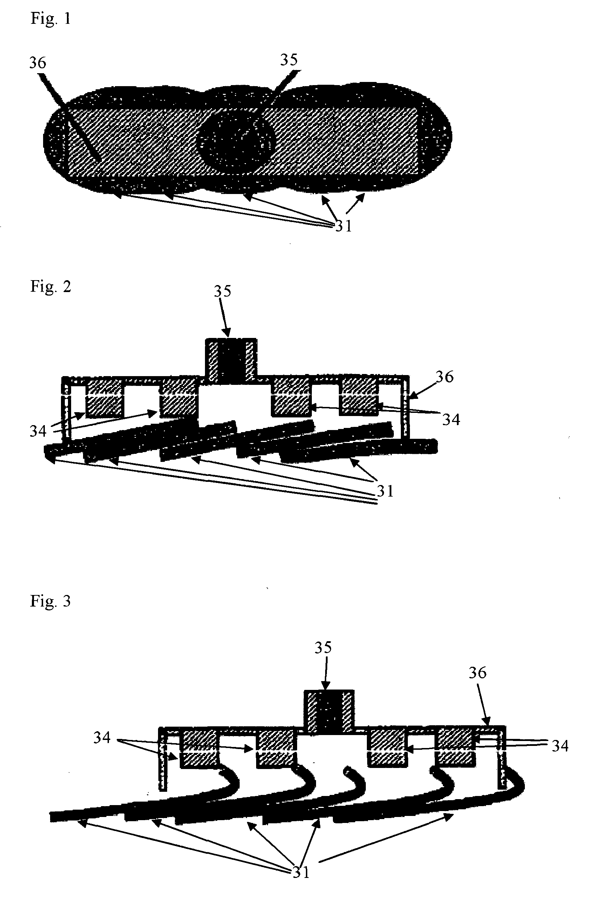

Figur 1 zeigt eine aus einem Leitungsabschnitt 36 gebildete Haltevorrichtung 30, deren Ansaugöffnung 18 auf sich überdeckenden Lebensmittelscheiben 31 angeordnet ist. Die Lebensmittelscheiben 31 sind mit Überdeckung zueinander versetzt. Die Ansaugöffnung 18 der Haltevorrichtung 30 erstreckt sich nur über einen etwa zentralen rechteckigen Anteil der Gesamtfläche, die von den Lebensmittelscheiben 31 gebildet wird. Die Haltevorrichtung 30 weist gegenüber der Ansaugöffnung 18 einen Anschluss 35 auf, an den ein Unterdruckerzeuger anzuschließen ist.

Figur 2 zeigt die Haltevorrichtung 30 im Schnitt, während Lebensmittelscheiben 31 durch Unterdruck angesaugt werden, der durch die erste Öffnung 5 wirkt. Innerhalb der Haltevorrichtung 30 angeordnete Abstandshalter 34 erstrecken sich bis in einen Abstand vor die Ebene der Ansaugöffnung 18. Die Abstandshalter 34 verbessern die Halterung der Lebensmittelscheiben 31 dadurch, dass sie ein Anliegen der Lebensmittelscheiben 31 an die Innenwand der Haltevorrichtung 30 verhindern. Denn ein Anliegen der Lebensmittelscheiben 31 an die Innenwand der Haltevorrichtung 30 würde die Wirkung des Unterdrucks auf die Gesamtfläche der Lebensmittelscheiben 31 mindern.

Figur 3 zeigt, dass beim Ansaugen von Lebensmittelscheiben 31, die weniger stark aneinander haften, z.B. trockene Oberflächen haben und/oder biegsamer sind, an die Ansaugöffnung 18. Auch bei solchen Lebensmittelscheiben 31 halten die Abstandshalter 34 die Lebensmittelscheiben 31 auf Abstand zur Innenfläche des Leitungsabschnitts 36, der die Haltevorrichtung 30 bildet und die Ansaugöffnung 18 aufspannt.

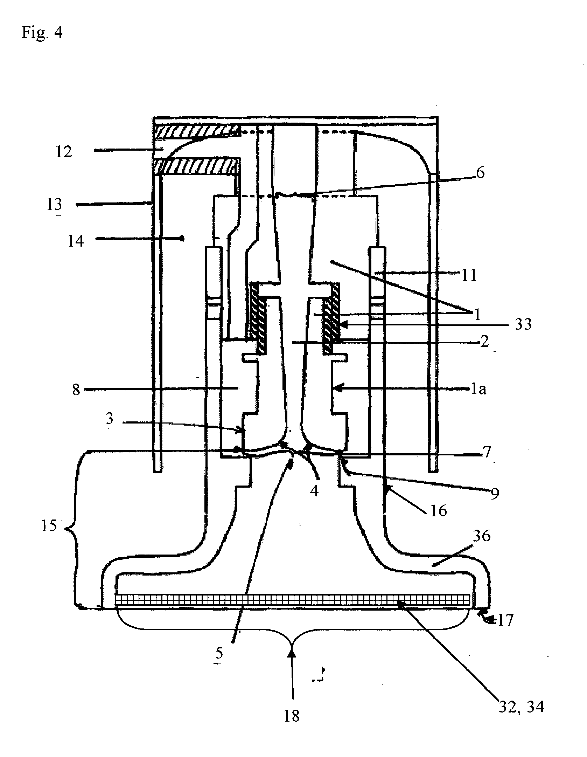

Die Figuren 4 bis 7 zeigen die Vorrichtung mit der bevorzugten Ausführungsform des Unterdruckerzeugers, an dessen Rohrabschnitt 16 der Leitungsabschnitt 36 angrenzt.

Wie in Figur 4 gezeigt ist, weist der Unterdruckerzeuger ein Zentralrohr 1 auf, in dem ein Zentralkanal 2 angeordnet ist, vorzugsweise koaxial zum Zentralrohr 1. Am ersten Ende 3 des Zentralkanals 2 spannt eine konvexe Fläche 4 des Zentralkanals 2 die erste Öffnung 5 des Zentralkanals 2 auf. Die konvexe Fläche 4 erstreckt sich vom kleinsten Querschnitt des Zentralkanals 2 bis in die Ebene, in der die erste Öffnung 5 aufgespannt ist. Vorzugsweise weist die konvexe Fläche 4 einen senkrecht zur Längsmittelachse des Zentralkanals 2 parabelförmigen Querschnitt auf, dessen Steigung von der Ebene, in der die erste Öffnung 5 angeordnet ist, zum Abschnitt des Zentralkanals 2 mit dessen geringstem Querschnitt zunimmt. Gegenüber der Ebene, in der die erste Öffnung 5 aufgespannt ist, erstreckt sich angrenzend an den Bereich des kleinsten Querschnitts des Zentralkanals 2 ein Abschnitt, dessen Querschnitt zur zweiten Öffnung 6 zunimmt, insbesondere sich konisch vom kleinsten Querschnitt des Zentralkanals 2 bis zur zweiten Öffnung 6 aufweitet. Die zweite Öffnung 6 bildet das zweite Ende 10 des Zentralrohrs gegenüber dessen erstem Ende 3. Angrenzend an die erste Öffnung 5 ist eine ringförmige Auslassöffnung 7 angeordnet, an die ein Eintrittskanal 8 für Druckluft angeschlossen ist. Vorzugsweise ist die ringförmige Auslassöffnung 7 etwa senkrecht zur Längsmittelachse des Zentralkanals 2 ausgerichtet, besonders bevorzugt senkrecht zur konvexen Fläche 4, um diese tangential mit austretender Druckluft anzuströmen.

Die ringförmige Auslassöffnung 7 wird von einem von der Zentralachse des Zentralkanals 2 beabstandeten Bereich der konvexen Fläche 4 und einer von dieser beabstandeten Schulter 9 gebildet, die z.B. an den Eintrittskanal 8 grenzt.

Der Eintrittskanal 8 wird von einem Bereich der Außenwandung 1a des Zentralrohrs 1 gebildet und zumindest abschnittsweise von einer Leitung 11, die besonders bevorzugt zylindrisch ist und koaxial zum Zentralkanal 2 angeordnet ist. Ein Druckluftanschluss 12, der am Gehäuse 13 angeordnet ist, ist mittels eines Druckluftkanals mit dem Eintrittskanal 8 verbunden.

An der zweiten Öffnung 6 des Zentralkanals 2 ist ein Austrittskanal 14 angeschlossen, der in einer Austrittsöffnung 19 mündet. Der Austrittskanal 14 wird entsprechend der bevorzugten Ausführungsform abschnittsweise von der Innenwandung des Gehäuses 13 und der Außenwandung der Leitung 11 gebildet. Der Austrittskanal 14 kann von der Innenwandung des Gehäuses 13 gebildet werden, das in einem Abstand um das Zentralrohr 1 angeordnet ist. Die Austrittsöffnung 19 ist entsprechend einer bevorzugten Ausführungsform auf die Ebene gerichtet, in der die Ansaugöffnung 18 aufgespannt ist.

Die Schulter 9 umfasst den Bereich, in dem die erste Öffnung 4 angeordnet ist, bzw. den Bereich des ersten Endes des Zentralrohrs 1, in dem bei Beaufschlagung des Unterdruckerzeugers mit Druckluft an Druckluftanschluss 12 Unterdruck erzeugt wird, der auch als Saugabschnitt 15 bezeichnet werden kann. Der Saugabschnitt 15 wird von einem mit dem Rohrabschnitt 16 verbundenen Leitungsabschnitt 36 gebildet, der gegenüber der Schulter 9 in einer Kante 17 mündet, die die Ansaugöffnung 18 aufspannt. Vorzugsweise ist die Ansaugöffnung 18 in einer Ebene aufgespannt, die etwa parallel zur Ebene der ersten Öffnung 5 liegt.

Der Rohrabschnitt 16 mit dem angrenzenden Leitungsabschnitt 36 überspannt den Saugabschnitt 15 von der ringförmig um die ringförmige Auslassöffnung 7 angeordneten Schulter 9 bis zur Ebene, in der die Kante 17 angeordnet ist. Der Rohrabschnitt 16 bzw. der Leitungsabschnitt 36 kann sich entlang des Saugabschnitts 15 zur Ansaugöffnung 18 verjüngen oder aufweiten; vorzugsweise überspannt die Ansaugöffnung 18 einen Querschnitt, der gleich dem oder größer als der Querschnitt des Gehäuses 13 ist. Bevorzugt ist der den Saugabschnitt 15 überspannende Rohrabschnitt 16 einstückig mit der Leitung 11 und der Schulter 9 gebildet.

Weiter bevorzugt ist das Zentralrohr 10, bzw. dessen zweiter Abschnitt, mit der Innenoberfläche des Gehäuses 13 verbunden. Optional kann das Zentralrohr 1, bzw. dessen zweiter Abschnitt, einstückig mit dem Gehäuse 13 ausgebildet sein. Die Leitung 11 kann am Zentralrohr 1 oder an dessen zweiten Abschnitt fixiert sein, insbesondere in Ausführungsformen, in denen das Zentralrohr 1 von einem ersten und einem zweiten Abschnitt gebildet wird, und der erste Abschnitt entlang der Längsachse des Zentralkanals 2 zum zweiten Abschnitt des Zentralrohrs 1 verschieblich ist, beispielsweise mittels eines Gewindes, in dem erster und zweiter Abschnitt des Zentralrohrs 1 miteinander in Eingriff stehen. Ein solches Gewinde bildet ein Stellglied 33, mit dem der an die ringförmige Auslassöffnung 7 angrenzende Abschnitt des Zentralrohrs 1 gegen die Schulter 9 verschieblich ist.

Ein optionales Gitter 32, das Abstandhalter bildet, ist in einem Abstand zur Ansaugöffnung 18 innerhalb des Rohrabschnitts 16 angeordnet.

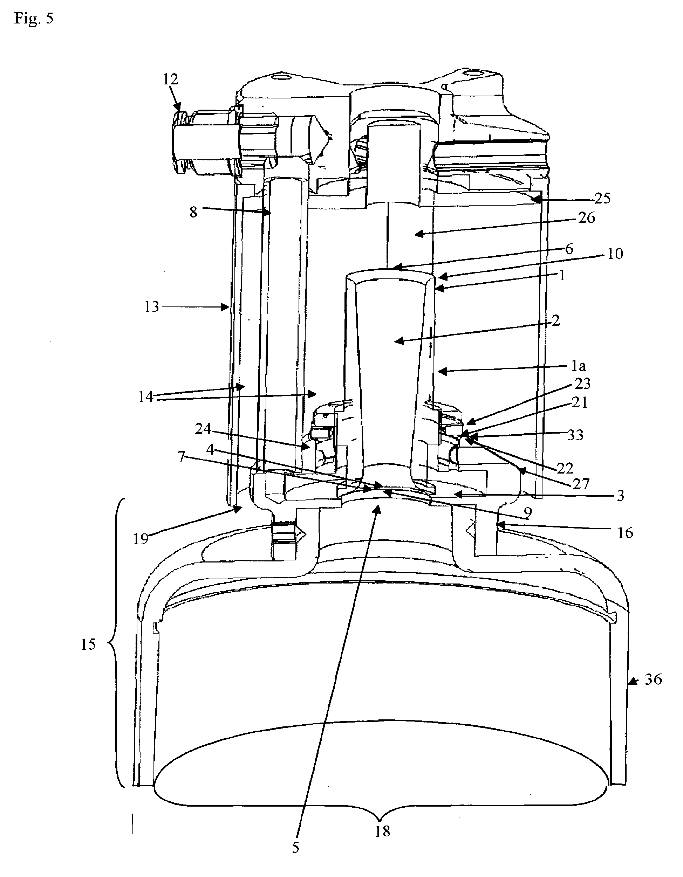

In der Ausführungsform von Figur 5 ist der Druckluftanschluss 12 an dem Ende des Gehäuses 13 angebracht, das gegenüber der Ansaugöffnung 18 liegt. Der Druckluftanschluss 12 ist mittels eines rohrförmigen Eintrittskanals 8 gebildet, der sich im Gehäuse 13 von dessen Ende gegenüber der Ansaugöffnung 18 zum Rohrabschnitt 16 erstreckt und weist innerhalb des Rohrabschnitts 16 einen Ringkanalabschnitt 20 auf, der sich um die ringförmige Auslassöffnung 7 erstreckt. Die ringförmige Auslassöffnung 7 wird durch die ringförmige Schulter 9 des Rohrabschnitts 16 und die beabstandete konvexe Fläche 4 der ersten Öffnung 5 des Zentralrohrs 1 gebildet. Das Zentralrohr 1 bildet auf seiner inneren Oberfläche den Zentralkanal 2, der sich von der ersten Öffnung 5 am ersten Ende 3 zur zweiten Öffnung 6 am gegenüberliegenden zweiten Ende 10 erstreckt und zwischen erstem Ende 3 und zweitem Ende 10 einen Abschnitt mit geringstem Querschnitt angrenzend an die konvexe Fläche 4 aufweist und sich zwischen diesem Abschnitt mit geringstem Querschnitt zum zweiten Ende vergrößert. Generell kann, wie auch hier dargestellt ist, der Rohrabschnitt 16 einen größeren Durchmesser als die ringförmige Schulter 9 bzw. als die ringförmige Auslassöffnung 7 aufweisen. Dabei ist bevorzugt, dass der Eintrittskanal 8 einen Ringkanalabschnitt 20 aufweist, der sich über einen Anteil des radialen Abschnitts, vorzugsweise über den gesamten radialen Abschnitt zwischen der ringförmigen Auslassöffnung 7 und dem an die ringförmige Auslassöffnung 7 angrenzenden Durchmesser des Rohrabschnitts 16 erstreckt.

Das Zentralrohr 1 weist auf seiner Außenfläche, die gegenüber dem Zentralkanal 2 liegt, eine erste Anlagefläche 21 auf. Die erste Anlagefläche 21 kann von einer Ausnehmung im Umfang des Zentralrohrs 1 gebildet sein, oder von einem das Zentralrohr 1 überragenden Ansatz 23. Die Ausnehmung bzw. ein das Zentralrohr 1 überragender Ansatz 23 sind vorzugsweise ringförmig und bilden eine ringförmige erste Anlagefläche 21. Die erste Anlagefläche 21 kann sich radial um die Längsachse des Zentralrohrs 1 in einer Ebene erstrecken oder ein Abschnitt einer Kegelfläche sein, die optional gewölbt ist. Die zweite Anlagefläche 22 ist parallel zur ersten Anlagefläche 21, so dass erste und zweite Anlagefläche 21, 22 aufeinanderliegen. Das Zentralrohr 1 ist von einem Abschnitt bzw. Stutzen 24 des Rohrabschnitts 16 umfasst bzw. längsverschieblich geführt, so dass das Zentralrohr 1 in diesen Abschnitt bzw. Stutzen 24 eingeschoben ist, bis seine erste Anlagefläche 21 gegen die zweite Anlagefläche 22 stößt. Optional ist ein Stellglied 33, z.B. ein Piezoelement, zwischen der ersten Anlagefläche 21 und der zweiten Anlagefläche 22 angeordnet. Durch Betätigen des Stellglieds wird das Zentralrohr 1 entlang seiner Längsachse gegenüber dem Rohrabschnitt 16 verschoben, so dass die Höhe der ringförmigen Auslassöffnung 7 zwischen der Schulter 9 und der konvexen Fläche 4 geändert wird. Wegen des großen Einflusses der Höhe der ringförmigen Auslassöffnung 7 auf den mittels der Druckluft erzeugten Unterdruck ist das Stellglied 33 generell zur Einstellung des erzeugten Unterdrucks während des Verfahrens zum Halten oder Transportieren geeignet. Überdies hat das Stellglied 33 zusätzlich zu der Wirkung als Regeleinrichtung für Unterdruck und Luftvolumen den Vorteil, mit der Schulter 9 und Bereich der konvexen Fläche 4 ein Verschlußventil für die Druckluft zu bilden.

Das Gehäuse 13 weist eine Trägerplatte 25 auf, die mittels zumindest eines rohrförmigen Abschnitts des Eintrittskanals 8 mit dem Rohrabschnitt 16 verbunden ist, bevorzugt mit zumindest zwei, bevorzugter mit drei Trägern 26, die sich zwischen Trägerplatte 25 und Rohrabschnitt 16 erstrecken, wobei zumindest ein Träger 26 einen Abschnitts des Eintrittskanals 8 bildet. Da die Trägerplatte 25 in einem Abstand vom zweiten Ende 10 des Zentralrohrs 1 angeordnet ist, bildet die Innenfläche des Gehäuses 13 mit der Außenfläche des Zentralrohrs 1 und den Trägern 26 den Austrittskanal 14, der sich bis zur Austrittsöffnung 19 erstreckt, die zwischen Gehäuse 13 und Rohrabschnitt 16 begrenzt ist.

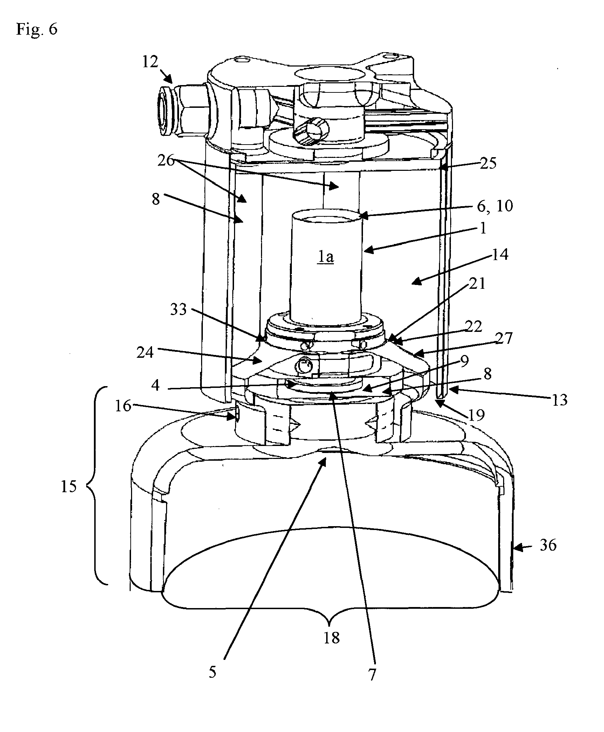

In Figur 6 ist der Schnitt vor dem Zentralrohr 1 gezogen, so dass die Außenfläche des Zentralrohrs 1 sichtbar ist. Wie dargestellt, ist generell bevorzugt, dass in Ausführungsformen, in denen der Austrittskanal 14 in eine in Richtung auf die Ebene der Ansaugöffnung gerichtete Austrittsöffnung 19 mündet, der Rohrabschnitt 16 einen Stutzen 24 mit einer Oberfläche 27 aufweist, die sich von der zweiten Anlagefläche 22 bis an die Austrittsöffnung 19 erstreckt, und insbesondere mit Neigung gegen die Längsachse des Zentralrohrs 1 verläuft.

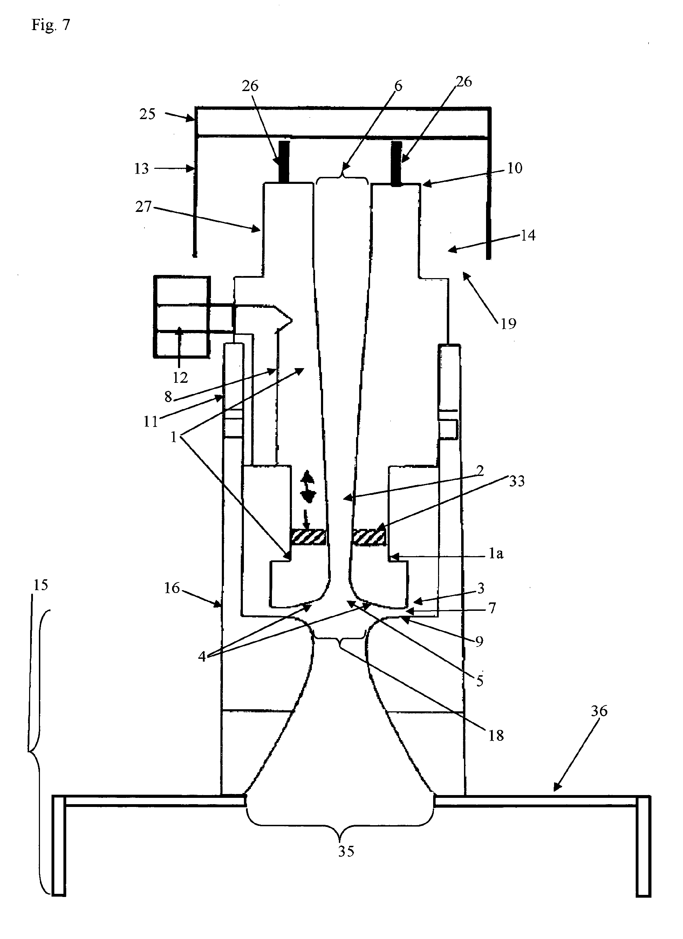

Figur 7 zeigt einen Unterdruckerzeuger mit Haltevorrichtung 28, bei dem das Zentralrohr 1 zwei gegeneinander längs der gemeinsamen Achse verschiebliche Abschnitte aufweist, die durch ein Stellglied 33 gesteuert gegeneinander beweglich sind.

**Bezugszeichenliste:**

| | | | |
|---|---|---|---|
| 1 | Zentralrohr | 18 | Ansaugöffnung |
| 1a | Außenwand des Zentralrohrs 1 | 19 | Austrittsöffnung |
| 2 | Zentralkanal | 20 | Ringkanalabschnitt |
| 3 | erstes Ende des Zentralrohrs 1 | 21 | erste Anlagefläche |
| 4 | konvexe Fläche | 22 | zweite Anlagefläche |
| 5 | erste Öffnung | 23 | Ansatz des Zentralrohrs |
| 6 | zweite Öffnung | 24 | Stutzen |
| 7 | ringförmige Auslassöffnung | 25 | Trägerplatte |
| 8 | Eintrittskanal | 26 | Träger |
| 9 | Schulter | 27 | Oberfläche des Stutzens |
| 10 | zweite Ende des Zentralrohrs 1 | 30 | Haltevorri chtung |
| 11 | Leitung | 31 | Lebensmittelscheiben |
| 12 | Druckluftanschluss | 32 | Gitter |
| 13 | Gehäuse | 33 | Stellglied |
| 14 | Austrittskanal | 34 | Abstandshalter |
| 15 | Saugabschnitt | 35 | Anschluss |
| 16 | Rohrabschnitt | 36 | Leitungsabschnitt |
| 17 | Kante | | |

## Patentansprüche

1. Verwendung eines mit einem Unterdruckerzeuger verbundenen Leitungsabschnitts (36) als Haltevorrichtung für Lebensmittelscheiben (31), die mit Überdeckung angeordnet sind, **dadurch gekennzeichnet, dass** der Leitungsabschnitt (36) einen Saugabschnitt (15) bildet und eine Ansaugöffnung (18) aufweist, die in einer ersten Stellung der Haltevorrichtung bei anliegendem Unterdruck gegen mit Überdeckung angeordnete Lebensmittelscheiben (31) angeordnet wird, wobei der Unterdruck bis in eine von der ersten Stellung beabstandete zweite Stellung der Haltevorrichtung anliegt und in der zweiten Stellung abgestellt wird.

2. Verwendung nach Anspruch 1, **dadurch gekennzeichnet, dass** die Haltevorrichtung
eingerichtet ist, dass der Leitungsabschnitt (36) in der zweiten Stellung mit Überdruck beaufschlagbar ist und/oder der Leitungsabschnitt (36) einen Auswerfer aufweist, der in der zweiten Stellung betätigt wird.

3. Verwendung gemäß einem der voranstehenden Ansprüche,
**dadurch gekennzeichnet, dass** die Haltevorrichtuniz einender Unterdruckerzeuger aufweist, der in einem Abstand zu einer Ansaugöffnung (18) eine um eine ringförmige Auslassöffnung (7) von einem Rohrabschnitt (16) beabstandete konvexe Oberfläche (4) aufweist, die eine erste Öffnung (5) eines in einem Zentralrohr (1) gebildeten Zentralkanals (2) aufspannt, wobei die konvexe Fläche (4) in einem axialen Abschnitt mit dem kleinsten Querschnitt des Zentralkanals (2) mündet, an welchen sich ein Abschnitt des Zentralkanals (2) anschließt, der sich bis zu einer der ersten Öffnung (5) gegenüberliegenden zweiten Öffnung (6) aufweitet, und
die ringförmige Auslassöffnung (7) über einen Eintrittskanal (8) mit einem Druckluftanschluss (12) verbunden ist, wobei das Zentralrohr (1) längsverschieblich in einer Ausnehmung des Rohrabschnitts (16) geführt ist, bis eine erste Anlagefläche (21), die das Zentralrohr (1) auf seiner Außenfläche gegenüber dem Zentralkanal (2) aufweist, an einer dazu parallelen zweiten Anlagefläche (22) des Rohrabschnitts (16) anliegt, wobei der Rohrabschnitt (16) mit einem Leitungsabschnitt (36) verbunden ist, der eine Ansaugöffnung (18) aufweist.

4. Verwendung nach Anspruch 3, **dadurch gekennzeichnet, dass** die ringförmige Auslassöffnung (7) von einem radial von der Längsachse des Zentralkanals (2) beabstandeten Abschnitt der konvexen Fläche (4) und einer axial von dieser beabstandeten Schulter (9) gebildet wird, die die konvexe Fläche (4) zumindest in einem ringförmigen Bereich überdeckt.

5. Verwendung nach Anspruch 3 oder 4, **dadurch gekennzeichnet, dass** das Zentralrohr (1) in einer Ausnehmung eines Stutzens (24) des Rohrabschnitts (16) geführt ist und die zweite Anlagefläche (22) die Ausnehmung des Stutzens (24) umfasst.

6. Verwendung nach einem der Ansprüche 3 bis 5, **dadurch gekennzeichnet, dass** innerhalb des Leitungsabschnitts (36) zumindest ein Abstandshalter (34) angeordnet ist, der sich bis maximal in die Ebene der Ansaugöffnung (18) erstreckt, und/oder innerhalb des Leitungsabschnitts (36) zumindest ein Auswerfer angeordnet ist, der gegen die Ansaugöffnung beweglich ist oder ein mit Druckluft beaufschlagbares Röhrchen ist, das vor oder in der Ebene der Ansaugöffnung (18) mündet

7. Verwendung nach einem der Ansprüche 3 bis 6, **dadurch gekennzeichnet, dass** die der ersten Öffnung (5) gegenüberliegende zweite Öffnung (6) des Zentralrohrs (1) mittels eines Ventils zumindest teilweise verschließbar ist, das an der zweiten Öffnung (6) oder an einer Leitung angeordnet ist, die an der zweiten Öffnung (6) des Zentralrohrs (1) angeschlossen ist und den Austrittskanal (14) bildet.

8. Verwendung nach einem der Ansprüche 3 bis 7, **dadurch gekennzeichnet, dass** das Zentralrohr (1) von einem Gehäuse (13) umfasst ist und der Eintrittskanal (8) abschnittsweise von der Außenwandung (10) des Zentralrohrs (1) und einer koaxial angeordneten beabstandeten Leitung (11) gebildet wird.

9. Verwendung nach einem der Ansprüche 3 bis 8, **dadurch gekennzeichnet, dass** der Rohrabschnitt (16) und der Leitungsabschnitt (36) aneinander angrenzen.

10. Verwendung nach einem der Ansprüche 3 bis 9, **dadurch gekennzeichnet, dass** am Zentralrohr (1) ein Stellglied (33) angeordnet ist, mit dem das Zentralrohr (1) zumindest abschnittsweise gegenüber der Schulter (9) des Rohrabschnitts (16) beweglich ist.

11. Verwendung nach einem der Ansprüche 3 bis 10, **dadurch gekennzeichnet, dass** ein Drucksensor im Rohrabschnitt (16) und/oder im Leitungsabschnitt (36) angeordnet ist und das Stellglied (33) in Abhängigkeit vom Messsignal des Drucksensors steuerbar ist.

12. Verwendung nach einem der Ansprüche 3 bis 11, **dadurch gekennzeichnet, dass** das Zentralrohr (1) mit dem Rohrabschnitt (16) mittels eines Bajonettverschlusses oder eines Gewindes verrastet ist.

13. Verwendung nach einem der Ansprüche 3 bis 12, **dadurch gekennzeichnet, dass** die zweite Öffnung (6) des Zentralrohrs (1) mit einer Leitung verbunden ist, die das Gehäuse (13) überragt.

14. Verwendung nach einem der Ansprüche 3 bis 13, **dadurch gekennzeichnet, dass** das Gehäuse (13) in einem Abstand zur zweiten Öffnung (6) angeordnet ist und einen Austrittskanal (14) umfasst, der in einer Austrittsöffnung (19) mündet, die durch den Rohrabschnitt (16) und das Gehäuse (13) begrenzt ist und auf die Ebene gerichtet ist, in der die Ansaugöffnung (18) liegt.

15. Verwendung nach einem der Ansprüche 3 bis 14, **dadurch gekennzeichnet, dass** der Stutzen (24) eine kontinuierliche Oberfläche (27) aufweist, die sich von der zweiten Anlagefläche (22) zur Austrittsöffnung (19) erstreckt und gegen die Längsachse des Zentralrohrs (1) geneigt ist.

16. Verwendung nach einem der voranstehenden Ansprüche, **dadurch gekennzeichnet, dass** das Zentralrohr (1) von einem ersten Abschnitt und einem entlang der Längsachse des Zentralkanals (2) verschieblichen zweiten Abschnitt gebildet wird.

17. Verwendung nach einem der Ansprüche 3 bis 16, **dadurch gekennzeichnet, dass** der Unterdruckerzeuger ein Ventil aufweist, das eingerichtet ist, periodisch die Leitung (11) für die Druckluftzufuhr zur ringförmigen Auslassöffnung (7) zu öffnen.

18. Verwendung nach einem der Ansprüche 3 bis 17, **dadurch gekennzeichnet, dass** ein Drucksensor und/oder ein Näherungsschalter im Saugabschnitt angeordnet ist und das Stellglied (33) in Abhängigkeit vom Messsignal des Drucksensors steuerbar ist.

19. Verfahren zur Herstellung von mit Überdeckung auf einer Unterlage angeordneten Lebensmittelscheiben (31), mit den Schritten des Bereitstellens von Lebensmittelscheiben (31) mit der Überdeckung und des Positionierens der Lebensmittelscheiben (31) auf der Unterlage, **gekennzeichnet durch** die Verwendung eines mit einem Unterdruckerzeuger verbundenen Leitungsabschnitts (36) für das Halten von Lebensmittelscheiben (31), wobei die von dem Leitungsabschnitt (36) gebildete Ansaugöffnung (18) in einer ersten Stellung gegen die Lebensmittelscheiben (31) angeordnet wird, das Beaufschlagen des Leitungsabschnitts (36) mit Unterdruck, das Ansaugen der Lebensmittelscheiben (31) an die Ansaugöffnung (18), sowie das Mindern des Unterdrucks und das Ablegen der Lebensmittelscheiben (31) auf der Unterlage und das Entfernen des Leitungsabschnitts (36) von den Lebensmittelscheiben in einer von der ersten Stellung beabstandeten zweiten Stellung.

20. Verfahren nach Anspruch 19, **dadurch gekennzeichnet, dass** der Rohrabschnitt (16) einschließlich des damit verbundenen Leitungsabschnitts (36), die den Saugabschnitt (15) bilden, zum Ablegen der Lebensmittelscheiben (31) mit Überdruck beaufschlagt wird.

21. Verfahren nach einem der Ansprüche 19 bis 20, **gekennzeichnet durch** die Verwendung nach einem der Ansprüche 3 bis 18.

## Claims

1. Use of a conduit section (36) connected to a low pressure generator as a gripper device for food slices (31) which are arranged with overlap, **characterized in that** the conduit section (36) forms a suction section (15) and has a suction opening (18) which in a first position of the gripper device with low pressure applied is arranged against the food slices (31) which are arranged with overlap, wherein the low pressure is applied until a second position of the gripper device spaced from the first position, and is switched off in the second position.

2. Use according to claim 1, **characterized in that** the gripper device is disposed such that the conduit section (36) in the second position can be loaded with overpressure and/or the conduit section (36) has an ejector which is operated in the second position.

3. Use according to one of the preceding claims, **characterized in that** the gripper device has a low pressure generator which in a distance to the suction opening (18) has a convex surface (4) spaced from a pipe section (16) by an annular outlet opening (7), wherein the convex surface (4) opens up a first opening (5) of a central channel (2) formed in a central well (1), wherein the convex surface (4) leads into an axial section having the smallest cross-section of the central channel (2) to which a section of the central channel (2) adjoins that broadens towards a first opening (5) lying opposite the second opening (6), and the annular outlet opening (7) is connected to a compressed air connection (12) by an inlet duct (8), wherein the central well (1) is guided longitudinally displaceable in a recess of the pipe section (16) until a first abutment face (21) provided on the outer surface of the central well (1) opposite the central channel (2) lies against a second abutment face (22) parallel thereto of the pipe section (16), wherein the pipe section (16) is connected to a conduit section (36) having a suction opening (18).

4. Use according to claim 3, **characterized in that** the annular outlet opening (7) is formed by a section of the convex surface (4) which is spaced radially from the longitudinal axis of the central channel (2) and by a shoulder (9) which is spaced axially thereto which at least in an annular region covers the convex surface (4).

5. Use according to claim 3 or 4, **characterized in that** the central well (1) is guided in a recess of a socket (24) of the pipe section (16) and the second abutment face (22) encompasses the recess of the socket (24).

6. Use according to one of claims 3 to 5, **characterized in that** within the conduit section (36) at least one distance piece (34) is arranged to extend maximally into the plane of the suction opening (18), and/or in the conduit section (36) at least one ejector is arranged which is moveable against the suction opening or is a tube which can be loaded with pressured air, the tube opening at or within the plane of the suction opening (18).

7. Use according to one of claims 3 to 6, **characterized in that** the second opening (6) of the central well (1) lying opposite the first opening (5) is closable at least partially by means of a valve, the valve being arranged at the second opening (6) or in a conduit connected to the second opening (6) of the central well (1), forming the exit channel (14).

8. Use according to one of claims 3 to 7, **characterized in that** the central well (1) is encompassed by a housing (13) and the entry channel (8) is sectionwise formed by the outer wall (10) of the central well (1) and a conduit (11) arranged coaxially with a spacing.

9. Use according to one of claims 3 to 8, **characterized in that** the pipe section (16) and the conduit section (36) adjoin to one another.

10. Use according to one of claims 3 to 9, **characterized in that** on the central well (1) an actuator (33) is arranged by which the central well (1) is moveable at least sectionwise with respect to the shoulder (9) of the pipe section (16).

11. Use according to one of claims 3 to 10, **characterized in that** a pressure sensor is arranged in the pipe section (16) and/or in the conduit section (36) and the actuator (33) is controllable in dependence on the measurement signal of the pressure sensor.

12. Use according to one of claims 3 to 11, **characterized in that** the central well (1) is latched to the pipe section (16) by means of a bayonet catch or by a thread.

13. Use according to one of claims 3 to 12, **characterized in that** the second opening (6) of the central well (1) is connected to a conduit which projects above the housing (13).

14. Use according to one of claims 3 to 13, **characterized in that** the housing (13) is arranged at a distance to the second opening (6) and encompasses an outlet duct (14) leading into an outlet opening (19) which is delimited by the pipe section (16) and the housing (13) and is directed towards the plane in which the suction opening (18) lies.

15. Use according to one of claims 3 to 14, **characterized in that** the socket (24) has a continuous surface (27) which extends from the second abutment face (22) to the exit opening (19) and is inclined against the longitudinal axis of the central well (1).

16. Use according to one of the preceding claims, **characterized in that** the central well (1) is formed by a first section and a second section which is moveable along the longitudinal axis of the central channel (2).

17. Use according to one of claims 3 to 16, **characterized in that** the low pressure generator has a valve which is disposed to periodically open the conduit (11) for the compressed air supply to the annular outlet opening (7).

18. Use according to one of claims 3 to 17, **characterized in that** a pressure sensor and/or a proximity switch is arranged in the suction section and the actuator (33) is controllable in dependence on the measurement signal of the pressure sensor.

19. Process for producing food slices (31) arranged with overlap on a support comprising the steps of providing food slices (31) having the overlap and positioning the food slices (31) on the support, **characterized by** the use of a conduit section (36) connected to a low pressure generator for gripping of food slices (31), wherein the suction section (18) formed by the conduit section (36) in a first position is arranged against the food slices (31), applying low pressure to the conduit section (36), sucking of the food slices (31) to the suction opening (18), as well as reducing the low pressure and depositing the food slices (31) onto the support and removing the conduit section (36) from the food slices in a second position spaced from the first position.

20. Process according to claim 19, **characterized in that** the pipe section (16) including the conduit section (36) connected thereto, which form the suction section (15), is loaded with overpressure for depositing the food slices (31).

21. Process according to one of claims 19 to 20, **characterized by** the use according to one of claims 3 to 18.

## Revendications

1. Utilisation d'une portion de conduit (36) reliée à un générateur de vide sous forme de dispositif de maintien pour tranches de produit alimentaire (31) munies d'une couverture, **caractérisée en ce que** la portion de conduit (36) constitue une partie aspiration (15) et présente une ouverture d'aspiration (18), qui sous l'effet de la dépression adopte une première position du dispositif de maintien contre des tranches de produit alimentaire (31) munies d'une couverture, où la dépression est appliquée jusqu'à une seconde position du dispositif de maintien, position écartée de la première position et est arrêtée dans la seconde position.

2. Utilisation selon la revendication 1, **caractérisée en ce que** le dispositif de maintien est conçu de telle sorte que la portion de conduit (36) peut être exposée à une surpression dans la seconde position et/ou que la portion de conduit (36) présente un éjecteur, qui est actionné dans la seconde position.

3. Utilisation selon l'une des revendications précédentes, **caractérisée en ce que** le dispositif de maintien présente l'un des générateurs de vide qui présente une surface convexe (4) espacée d'une partie tubulaire (16) autour d'une ouverture d'évacuation annulaire (7), à une certaine distance d'une ouverture d'aspiration (18), qui recouvre une première ouverture (5) d'un canal central (2) constitué dans un tube central (1), où la face convexe (4) émerge dans une portion axiale avec la section transversale la plus petite du canal central (2), portion à laquelle se raccorde une portion du canal central (2), qui s'élargit jusqu'à une seconde ouverture (6) opposée à la première ouverture (5), et que l'ouverture d'évacuation annulaire (7) est reliée à un raccord d'air comprimé (12) par le biais d'un canal d'entrée (8), où le tube central (1) est guidé mobile dans le sens de la longueur dans un évidement de la partie tubulaire (16), jusqu'à ce qu'une première surface d'appui (21), présentant le tube central (1) sur sa face externe opposée au canal central (2), repose sur une seconde surface d'appui (22) parallèle de la partie tubulaire (16), où la partie tubulaire (16) est reliée à une portion de conduit (36), qui présente une ouverture d'aspiration (18).

4. Utilisation selon la revendication 3, **caractérisée en ce que** l'ouverture d'évacuation annulaire (7) est constituée d'une partie de la surface convexe (4), partie espacée radialement du canal central (2), et d'un épaulement (9) espacé axialement de ladite surface convexe, épaulement recouvrant la surface convexe (4) au moins dans une zone annulaire.

5. Utilisation selon la revendication 3 ou 4, **caractérisée en ce que** le tube central (1) est guidé mobile dans un évidement d'un montant (24) de la partie tubulaire (16) et la seconde surface d'appui (22) contient l'évidement du montant (24).

6. Utilisation selon l'une quelconque des revendications 3 à 5, **caractérisée en ce qu'**au moins une entretoise (34) est disposée à l'intérieur de la portion de conduit (36) qui s'étend au maximum dans le plan de l'ouverture d'aspiration (18), et/ou qu'au moins un éjecteur est disposé à l'intérieur de la portion de conduit, éjecteur mobile vers l'ouverture d'aspiration ou bien consiste en un petit tube pouvant être exposé à de l'air comprimé, petit tube émergeant devant ou dans le plan de l'ouverture d'aspiration (18)

7. Utilisation selon l'une quelconque des revendications 3 à 6, **caractérisée en ce que** la seconde ouverture (6) du tube central (1) opposée à la première ouverture (5) peut être obturée au moins partiellement à l'aide d'une soupape, qui est disposée au niveau de la seconde ouverture (6) ou d'un conduit, qui est raccordé à la seconde ouverture (6) du tube central et constitue le canal de sortie (14).

8. Utilisation selon l'une des revendications 3 à 7, **caractérisée en ce que** le tube central (1) est entouré d'un logement (13) et que le canal d'entrée (8) est constitué, par sections, de la paroi externe (10) du tube central (1) et d'un conduit (11) espacé coaxialement.

9. Utilisation selon l'une des revendications 3 à 8, **caractérisée en ce que** la partie tubulaire (16) et la portion de conduit (36) sont contiguës.

10. Utilisation selon l'une des revendications 3 à 9, **caractérisée en ce qu'**un élément de réglage (33) est disposé au niveau du tube central (1), élément de réglage avec lequel le tube central (1) est mobile au moins par sections par rapport à l'épaulement (9) de la partie tubulaire (16).

11. Utilisation selon l'une des revendications 3 à 10, **caractérisée en ce qu'**un capteur de pression est prévu dans la partie tubulaire (16) et/ou dans la portion de conduit (36) et que l'élément de réglage (33) est manoeuvrable en fonction du signal de mesure du capteur de pression.

12. Utilisation selon l'une des revendications 3 à 11, **caractérisée en ce que** le tube central (1) est verrouillé avec la partie tubulaire (16) au moyen d'une fermeture à baïonnette ou d'un filet.

13. Utilisation selon l'une des revendications 3 à 12, **caractérisée en ce que** la seconde ouverture (6) du tube central (1) est reliée à un conduit qui surmonte le logement (13).

14. Utilisation selon l'une des revendications 3 à 13, **caractérisée en ce que** le logement (13) est prévu à une certaine distance de la seconde ouverture (6) et comprend un canal de sortie (14), qui émerge dans une ouverture de sortie (19), laquelle est limitée par la partie tubulaire (16) et le logement (13) et est orientée sur le plan dans lequel repose l'ouverture d'aspiration (18).

15. Utilisation selon l'une des revendications 3 à 14, **caractérisée en ce que** le montant (24) présente une surface continue (27), laquelle s'étend de la seconde surface d'appui (22) à l'ouverture de sortie (19) et est inclinée contre l'axe longitudinal du tube central (1).

16. Utilisation selon l'une des revendications précédentes, **caractérisée en ce que** le tube central (1) est constitué d'une première section et d'une seconde section que l'on peut déplacer le long de l'axe longitudinal du canal central (2).

17. Utilisation selon l'une des revendications 3 à 16, **caractérisée en ce que** le générateur de vide comporte une soupape qui est conçue pour ouvrir périodiquement le conduit (11) pour l'arrivée d'air comprimé vers l'ouverture d'évacuation annulaire (7).

18. Utilisation selon l'une des revendications 3 à 17, **caractérisée en ce qu'**un capteur de pression et/ou un interrupteur de proximité est prévu dans la partie aspiration et que l'élément de réglage (33) est manoeuvrable en fonction du signal de mesure du capteur de pression.

19. Procédé de fabrication de tranches de produit alimentaire (31) disposées avec une couverture sur un support, comprenant les phases de préparation de tranches de produit alimentaire (31) avec la couverture et de positionnement des tranches de produit alimentaire (31) sur le support, **caractérisé par** l'utilisation d'une portion de conduit (36) reliée à un générateur de vide pour assurer le maintien de tranches de produit alimentaire (31), où l'ouverture d'aspiration (18) constituée de la portion de conduit (36) est prévue dans une première position contre les tranches de produit alimentaire (31), par l'application de vide à la portion de conduit (36), par l'aspiration des tranches de produit alimentaire (31) contre l'ouverture d'aspiration (18) de même que par la réduction de la dépression et la pose des tranches de produit alimentaire (31) sur le support et par l'élimination de la portion de conduit (36) des tranches de produit alimentaire, dans une seconde position écartée de la première position.

20. Procédé selon la revendication 19, **caractérisé en ce que** la partie tubulaire (16), englobant la portion de conduit (36) reliée à celle-ci, et formant toutes deux la partie aspiration (15), est soumise à une surpression pour déposer les tranches de produit alimentaire (31).

21. Procédé selon l'une quelconque des revendications 19 ou 20, **caractérisé par** l'utilisation selon l'une des revendications 3 à 18.
